# EUROPÄISCHE PATENTANMELDUNG

(11) **EP 1 591 349 A1**
(43) Veröffentlichungstag der Anmeldung: **02.11.2005**
(21) Anmeldenummer: 04405267.8
(22) Anmeldetag: 29.04.2004
(51) Int. Cl.: B62D 21/02, B62D 33/077

(54) **Anordnung zur Verbindung von Rahmenlängsträgern**

(71) Anmelder: Alcan Technology & Management Ltd., 8212 Neuhausen am Rheinfall (CH)
(72) Erfinder: Die Erfindernennung liegt noch nicht vor

(57) **Zusammenfassung**

Die Erfindung betrifft einen Hilfsrahmen (1) für Kraftfahrzeuge, insbesondere für Vorderachsen von Personenkraftwagen, enthaltend zwei in Abstand zueinander angeordnete, in Fahrzeuglängsrichtung ausgerichtete Seitenträger (2a, 2b) sowie wenigstens einen die beiden Seitenträger miteinander verbindenden Querträger (4), wobei der Querträger jeweils über ein Knotenelement (5, 6) mit den Seitenträger verbunden ist. Die Erfindung zeichnet sich dadurch aus, dass das Knotenelement (5, 6) ein Gussteil mit wenigstens einer integrierten, der unteren Trägerfläche des Seitenträgers (2a, 2b) anliegenden Seitenträger-Auflagefläche und wenigstens einer integrierten, der unteren Trägerfläche des Querträgers (4) anliegenden Querträger-Auflagefläche sowie mit wenigstens einer integrierten Anschlussstelle für die Anbindung oder Abstützung von Fahrzeugkomponenten, wobei die Anschlusstelle eine von der Seitenträger-Auflagefläche vorstehende und von unten in einer Ausnehmung durch den Seitenträger (2a, 2b) oder eine von der Querträger-Auflagefläche vorstehende und von unten in einer Ausnehmung durch den Querträger (4) geführte hülsenartige Anformung (9, 10, 12, 13) am Knotenelement (5, 6) ist. Dies erlaubt eine durchgängige Ausführung des Seitenträgers im, durch einen knoten verstärkten Verbindungsbereich mit dem Querträger.

## Beschreibung

Vorliegende Erfindung betrifft einen Hilfsrahmen für Kraftfahrzeuge, insbesondere für Vorderachsen von Personenkraftwagen, enthaltend zwei in Abstand zueinander angeordnete, in Fahrzeuglängsrichtung verlaufende Seitenträger sowie wenigstens einen die beiden Seitenträger miteinander verbindenden Querträger, wobei der Querträger jeweils über ein zusätzlich versteifendes Knotenelement mit den Seitenträgern verbunden ist.

Hilfsrahmen für Kraftfahrzeuge finden insbesondere für Personenkraftwagen, aber auch für mit Personenkraftwagen im Aufbau ähnlichen Fahrzeugen bis hin zu Geländewagen und leichten Lieferfahrzeugen Verwendung und sind als mit der Karosserie des Fahrzeuges über elastische Lager verbundene Fahrschemel oder auch zur Vorderwagenaussteifung eingesetzt, bei denen der Hilfsrahmen mit dem Rahmen oder dem Aufbau des Fahrzeuges, insbesondere den Längsträgern des Fahrzeuges, wie Vorbauträgern oder dergleichen, starr verbunden ist. Sowohl in der Ausgestaltung als Fahrschemel wie auch in der Ausgestaltung als versteifende Struktur sind die Hilfsrahmen mitunter Montagerahmen, an denen Radführungsglieder, gegebenenfalls einschliessslich Radfederung, angelenkt bzw. abgestützt sind. Fallweise dienen die Hilfsrahmen auch als Träger für das Lenkgetriebe, oder des Stabilisators. Ferner können die Hilfsrahmen auch Motorträger sein. Aufgrund der vielfältigen Funktionen, welche solche Hilfsrahmen mitunter innehaben, müssen die Hilfsrahmen in Berücksichtigung der auf diese im Normalbetrieb einwirkenden Kräfte recht stabil ausgeführt werden.

Die Hilfsrahmen sind üblicherweise aufgebaut aus zwei, in Fahrzeuglängsrichtung ausgerichteten Seitenträgern, die über vordere und hintere, elastische oder starre Anbindungspunkte mit dem Aufbau- oder Rahmenlängsträgern, d.h. der Karosseriestruktur verbunden sind und die ferner über ein, zwei oder mehrere Querträger miteinander verbunden sind, wobei der Hilfsrahmen üblicherweise eine in sich geschlossene Einheit bildet. Die Querträger sind hierbei häufig über sogenannte Knotenelemente mit den Seitenträgern verbunden.

In der Praxis werden solche Hilfsrahmen sowohl in Verbindung mit Vorderachsen wie auch mit Hinterachsen von Personenkraftwagen eingesetzt, wobei sich insbesondere in Verbindung mit Vorderachsen besondere Anforderungen an den Hilfsrahmen und an die Vorbaugestaltung des Fahrzeuges bezüglich des Deformationsverhaltens der Rahmenstruktur in einem Aufprallereignis ergeben.

Bei einem Frontalaufprall bilden die in Fahrzeuglängsrichtung ausgerichteten Längsträger der Vorderbaustruktur sogenannte Lastpfade aus, über welche die im Stossfängerbereich bzw. im vorderen Crashbereich eingeleitete Aufprallenergie in die hintere, der Fahrgastzelle nahe liegende Fahrzeugstruktur eingeleitet wird.

Zur Vermeidung oder Verminderung einer solchen Krafteinleitung in die Fahrgastzelle selbst, wird im Rahmen der Vorbaugestaltung häufig eine gezielte Deformierbarkeit der dem Rahmen oder dem Aufbau zugehörigen Längsträger vorgesehen, wobei die entsprechenden Deformationszonen wenigstens Teilbereiche der rahmen- oder aufbauseitigen Längsträger sind. In diesen Deformationszonen wird Aufprallenergie durch kontrollierte Stauchung, insbesondere Faltung, des Trägerbereichs absorbiert.

Die Ausbildung solcher Deformationszonen trägt im Falle eines Aufprallereignisses, insbesondere eines Frontalaufpralls, zur Erhöhung der Sicherheit der Fahrgäste bei, indem die Längsträger mittels Stauchung der Trägerstruktur unter Schonung der Fahrgastzelle Aufprallenergie absorbieren.

Die in Fahrzeuglängsrichtung ausgerichteten Seitenträger des Hilfsrahmens bilden ebenfalls Lastpfade aus, durch welche Aufprallenergie in hintere Bereiche der Fahrzeugstruktur weitergeleitet wird. Zur Steigerung der Energieabsorption im Vorderbaubereich und somit zur Steigerung der Sicherheit der Fahrgäste, werden häufig auch die Seitenträger mit Deformationszonen ausgebildet, wobei wenigstens in Teilabschnitten der Seitenträger durch kontrollierte Stauchung, insbesondere Faltung, des Seitenträgers Aufprallenergie absorbiert wird.

Die Ausbildung einer weiteren Deformationsebene im Bereich des Hilfsrahmens weist den Vorteil auf, dass die einerseits über die Längsträger und andererseits über die darunterliegenden Seitenträger eingeleitete Energie auf verschiedenen Ebenen abgebaut wird und somit zu einer Erhöhung der Sicherheit beiträgt. Gleichzeitig wird die Absorption von Aufprallenegie durch den Fahrzeugvorderbau erheblich gesteigert.

Die Anbindung der Querträger an die Seitenträger führt jedoch erfahrungsgemäss zu einem nachteiligen Deformationsverhalten der Trägerabschnitte im Anbindungsbereich oder der dem Anbindungbereich nachangeordneten Deformationsbereiche.

Die Seitenträger sind nämlich im Bereich der Querträgeranbindung, insbesondere im Bereich der hinteren Querträger, bei welchen Gussknoten eingesetzt werden, häufig teilweise oder vollständig unterbrochen, was die bereits erwähnten nachteiligen Auswirkungen auf das Deformationsverhalten der Seitenträger mitverursacht.

Aufgabe vorliegender Erfindung ist es daher, einen Hilfsrahmen der oben genannten Art, und insbesondere eine Lösung zur Anbindung des Querträgers an die Seitenträger, vorzuschlagen, wobei der Hilfsrahmen sowohl hinsichtlich des Deformationsverhaltens unter Sicherheitsgesichtspunkten wie auch hinsichtlich der notwendigen Betriebsfestigkeit und Steifigkeit befriedigen soll, und durch welchen zudem günstige Montagevoraussetzungen geschaffen werden.

Erfindungsgemäss wird die Aufgabe dadurch gelöst, dass das Knotenelement ein Gussteil mit wenigstens einer integrierten, der unteren Träger- bzw. Profilfläche des Seitenträgers anliegenden Seitenträger-Auflagefläche und wenigstens einer integrierten, der unteren Trägerfläche bzw. Profilfläche des Querträgers anliegenden Querträger-Auflagefläche sowie mit wenigstens einer integrierten Anschlussstelle für die Anbindung oder Abstützung einer Fahrzeugkomponente, wobei die Anschlusstelle eine von der Seitenträger-Auflagefläche vorstehende und von unten in einer Ausnehmung durch den Seitenträger oder eine von der Querträger-Auflagefläche vorstehende und von unten in einer Ausnehmung durch den Querträger geführte hülsenartige Anformung am Knotenelement ist.

Untere Trägerfläche bzw. Profilfläche oder Profilwand bedeutet eine dem Boden zugewandte und obere Trägerfläche bzw. Profilfläche oder Profilwand eine dem Motorraum zugewandte Trägerfläche.

In bevorzugter Ausführung der Erfindung ist die Anschlussstelle eine Karosserie-Anschlussstelle zur Anbindung des Hilfsrahmens an eine übergeordnete Karosseriestruktur, insbesondere eine Fahrzeuglängsträger-Anschlussstelle zur Anbindung des Hilfsrahmens an den oder die Fahrzeuglängsträger. Die Anschlussstelle kann ferner auch eine Motormodul-Anschlussstelle zur Abstützung/Lagerung/Anbindung eines Motormoduls auf den Seitenträger sein.

Die hülsenartige Anformungen durchqueren den Seitenträger vollständig und treten mit ihrem Endabschnitt andernends aus der oberen Trägerfläche des Seitenträgers hervor, wobei der besagte Endabschnitt mit der oberen Trägerfläche bündig liegt oder um ein bestimmtes Mass über die obere Trägerfläche hinaus vorsteht.

Die Anbindung der Fahrzeugkomponenten erfolgt dabei über die genannten Endabschnitte.

Die hülsenartige Anformung ist vorzugsweise mit ihrem freien, aus dem Seitenträger austretenden Ende entlang des Kontaktrandes zur oberen Trägerfläche mit dieser verschweisst.

Die hülsenartige Anformung ist querschnittlich bevorzugt von rundlicher, insbesondere von kreisförmiger Gestalt. Sie weist zweckmässig eine durch eine Aussenwand begrenzte Hohlkammer auf. Die hülsenartige Anformung ist insbesondere in Form eines Hohlzylinders ausgebildet. Die hülsenartige Anformung kann ferner zu ihrem Endabschnitt hin konisch verjüngt ausgebildet sein.

Gemäss einer ersten Ausführungsform weist die hülsenartige Anformung unter Ausbildung zweier gegenüberliegender Öffnungen eine durchgehend offene Kammer auf. Die hülsenartige Anformung enthält bevorzugt Mittel zum Fixieren von Komponenten mittels Schraubverbindungen.

In Weiterbildung dieser Ausführungsform kann die hülsenförmige Anformung im Bereich ihres oberen, freien Endabschnittes eine ringförmige, vollumfängliche Verengung der Kammer enthalten. Die Verengung dient bsp. zur Aufnahme einer Schraubmutter zwecks Fixierung eines Schraubbolzens. Die genannte ringförmige Verengung ist insbesondere in Anschlussstellen zur Anbindung einer Karosseriestruktur mittels Schraubbolzen vorgesehen. Sie kann jedoch auch in Anschlussstellen zur Anbindung eines Motormoduls mittels Schraubbolzen vorgesehen sein.

Gemäss einer zweiten Ausführungsform weist die hülsenartige Anformung in ihrem oberen, freien Endabschnitt eine pfannenartige, konische Vertiefung auf, welche durch eine die Kammer unterbrechende Kammerwand geformt wird. Die Ausbildung einer solchen pfannenartigen Vertiefung wird vorzugsweise in Anschlussstellen vorgesehen, in welchen eine Komponente, insbesondere ein Motormodul, auf den Hilfsrahmen abgestützt bzw. gelagert wird, wobei die genannte Vertiefung als Zentrierhilfe dient. Die hülsenartige Anformung kann zusätzlich mittel zum Fixieren der Komponente bzw. des Motormoduls mittels Schraubverbindungen, insbesondere mittels Schraubbolzen und Schraubmuttern, enthalten. Diese Mittel können einen Durchbruch durch die pfannenartige, konische Vertiefung bzw. durch die Kammerwand umfassen.

Die Anbindung der Fahrzeugkomponenten an die besagte Anschlussstelle kann, wie erwähnt, mittels Schraubverbindungen geschehen, welche in die hülsenartige Anformung greifen. Ferner kann die Anbindung über in die hülsenartige Anformung greifenden Verbindungsbolzen, wie mittels Schraubmuttern fixierte Schraubbolzen, geschehen.

In bevorzugter Ausführung der Erfindung ist der Seitenträger im Bereich der Querträger-Anbindung mittels Gussknoten durchgängig ausgebildet. Der Seitenträger ist im genannten Bereich vorzugsweise nur durch die die hülsenartigen Anformungen des Knotenelementes aufnehmenden Ausnehmungen durchbrochen.

Der Seitenträger und/oder der Querträger sind bevorzugt Ein- oder Mehrkammerhohlprofile. Der Seitenträger und/oder der Querträger bestehen bevorzugt aus einem Metall wie Stahl und vorzugsweise aus einem Leichtmetall, wie Aluminium oder einer Aluminiumlegierung.

Der Seitenträger und/oder der Querträger sind bevorzugt Extrusionsprofile. Die Extrusionsprofile können ferner mittels weiteren Umformverfahren, wie Innenhochdruckumformen, zu, vom ursprünglichen Extrusionsprofil abweichende Querschnitte umgeformt sein.

Die genannten Träger können jedoch auch aus einem Walzprodukt geformt und geschweisst sein.

Die Querträger sind zweckmässig quer zu den Seitenträgern angeordnet, bsp. in einem Winkel von rund 90°.

Das Knotenelement ist bevorzugt aus einem Metall, vorzugsweise aus einem Leichtmetall, insbesondere aus Aluminium oder einer Aluminiumlegierung. Das Knotenelement ist zweckmässig ein Gussteil, welches bsp. mittels Druckguss, Kokillenguss oder Sandguss hergestellt ist. Das Knotenelement ist ferner zweckmässig einstückig ausgebildet. In bevorzugter Ausführung ist das Knotenelement ein flächiges Formteil mit von diesem abstehenden hülsenartigen Anformungen. Das Knotenelement enthält ferner bevorzugt die Auflageflächen versteifende Verstärkungsrippen bzw. Versteifungsstege.

In einer weiteren bevorzugten Ausführungsform eines Hilfsrahmens enthält das Knotenelement in seinen Seitenträger-Auflageflächen eine erste integrierte Fahrzeuglängsträger-Anschlussstelle und eine zweite integrierte Motormodul-Anschlussstelle, wobei die Anschlusstellen wie vorgängig beschrieben von einer Seitenträger-Auflagefläche vorstehende und von unten in Ausnehmungen durch den Seitenträger geführte hülsenartige Anformungen am Knotenelement sind.

In Weiterbildung der Erfindung enthält das Knotenelement in seiner Querträger-Auflagefläche eine integrierte Anschlussstelle zur Anbindung oder Abstützung einer Fahrzeugkomponente, wobei die Anschlussstelle eine von einer Querträger-Auflagefläche vorstehende und von unten in einer Ausnehmung durch den Querträger geführte hülsenartige Anformung am Knotenelement ist. Die vorgenannte Anschlussstelle ist vorzugsweise eine Motormodul-Anschlussstelle für die Abstützung eines Motormodul auf den Querträger oder eine Fahrzeuglängsträger-Anschlussstelle zur Anbindung des Hilfsrahmens an den Fahrzeuglängsträger.

Die oben beschriebenen Motormodul-Anschlussstelle(n) können insbesondere sowohl als Lagerpunkte wie auch als Anbindungsstellen ausgebildet sein.

Die hülsenartige Anformung durchquert den Querträger vollständig und tritt mit ihrem Endabschnitt andernends aus der oberen Trägerfläche des Querträgers hervor, wobei der besagte Endabschnitt mit der oberen Trägerfläche bündig liegt oder um ein bestimmtes Mass über die obere Trägerfläche hinaus vorsteht.

Die hülsenartige Anformung ist vorzugsweise mit ihrem freien, aus dem Querträger austretenden Ende entlang des Kontaktrandes zur oberen Trägerfläche mit dieser verschweisst. Die hülsenartige Anformung kann gemäss einer der oben beschriebenen Ausführungsform ausgebildet sein.

Das Knotenelement kann ferner zusätzlich zu den oben genannten Anschlussstellen für Motormodul und Karosserie noch eine oder mehrere weitere integrierte Anschlussstellen zur Anbindung von Lenkerelementen, wie Fahrwerkslenker, und/oder Streben, wie Zugstreben, oder Lagerungspunkte enthalten. Die Anschlussstellen können in der Form von hülsenartigen Anformungen wie oben beschrieben oder in anderer Form, z.B. als Bohrungen bzw. durchgehende Ausnehmungen ausgestaltet sein.

In Weiterentwicklung der Erfindung ist das Knotenelement gabelförmig mit einem ersten und zweiten jeweils eine Seitenträger-Auflagefläche ausbildenden Gabelschenkel. Die Gabelschenkel liegen der unteren Trägerfläche des Seitenträgers an. In einem ersten Gabelschenkel ist bevorzugt eine Karosserie- bzw. Fahrzeuglängsträger-Anschlussstelle und in einem zweiten Gabelschenkel bevorzugt eine Motormodul-Anschlussstelle ausgebildet. Der Endabschnitt des Querträgers kann unter Anlage an der unteren Trägerfläche des Seitenträgers zwischen dem ersten und zweiten Gabelschenkel hindurchgeführt sein.

Der Seitenträger kann ferner zur Aufnahme des Querträger-Endabschnittes eine Ausnehmung aufweisen. Die Ausnehmung kann bsp. durch Entfernen der unteren Trägerfläche bzw. Profilwand im Bereich der Querträger Anlagefläche ausgebildet sein. Der Querträger stützt sich gemäss dieser Ausführung auf die Stirnfläche einer äusseren und inneren Trägerfläche des Seitenträgers ab.

Der zwischen dem ersten und zweiten Gabelschenkel angeordnete Endabschnitt des Querträgers weist bevorzugt einen U-förmigen offenen Querschnitt auf und ist als Anschlussstelle für Lenkerelemente, wie Fahrwerkslenker, ausgebildet. Der U-förmige, offene Querschnitt des Endabschnittes des als Hohlprofil ausgebildeten Querträgers kann durch Quetschen des Profilquerschnitts oder Abtrennen einer Profilwand ausgebildet sein.

Das Knotenelement kann entlang seiner Kontaktränder mit dem Seitenträger abschnittsweise oder durchgehend mit dem Seitenträger verschweisst sein. Das Knotenelement kann ferner entlang seiner Kontaktränder mit dem Querträger abschnittsweise oder durchgehend mit dem Querträger verschweisst sein. Ferner kann der Querträger entlang seiner Kontaktränder mit dem Seitenträger abschnittsweise oder durchgehend mit dem Seitenträger verschweisst sein.

Die Seitenträger des erfindungsgemässen Hilfsrahmens bilden in Vorwärtsfahrtrichtung bevorzugt vordere freie Enden aus, über welche bei einem Frontalaufprall die Aufprallenergie in die Seitenträger eingeleitet wird. Die Seitenträger sind ferner mit ihren hinteren Endbereichen bevorzugt an die Bodengruppe oder Schweller angebunden. Die nicht durch die Seitenträger des Hilfsrahmens absorbierte Aufprallenergie wird hier in die Bodengruppe bzw. in den Schwellerbereich der dahinterliegenden Fahrzeugstruktur eingeleitet.

Eine besonders bevorzugte Ausführung der Erfindung umfasst einen Hilfsrahmen für Vorderachsen, enthaltend zwei in Abstand zueinander angeordnete, in Fahrzeuglängsrichtung ausgerichtete Seitenträger sowie einen in Vorwärtsfahrtrichtung vorderen und hinteren Querträger. Die beiden Querträger sind zueinander beabstandet und verbinden die beiden Seitenträger miteinander. Die Verbindung wenigstens eines Querträgers, vorzugsweise des hinteren Querträgers, mit den beiden Seitenträgern erfolgt über die vorgenannten Knotenelemente. Da im Bereich des hinteren Querträgers eine höhere Anzahl von Anbindungspunkten notwendig sind als im Bereich des vorderen Querträgers, ist in jenem Bereich die Verwendung von Knotenelementen mit einer verhältnismässig hohen Anzahl an integrierten Anschlussstellen besonders bevorzugt.

Der zweite Querträger, vorzugsweise der vordere Querträger, kann ebenfalls mittels der vorgenannten Knotenelementen mit den beiden Seitenträgern verbunden sein. Der zweite Querträger kann aber auch mittels anderen Verbindungselementen, wie z.B. über Extrusionsknoten, mit den Seitenträgern versteifend verbunden sein. Die Seitenträger sind jedoch bevorzugt sowohl im Anbindungsbereich des vorderen wie auch des hinteren Querträgers durchgängig, d.h. unterbruchslos ausgebildet.

Das Knotenelement des erfindungsgemässen Hilfsrahmens zeichnet sich durch eine hohe Funktionsintegration aus. Dadurch wird die Anzahl der Montageteile zur Herstellung des Hilfsrahmens mit Verbindungselementen und Anbindungsstellen merklich reduziert.

Das Knotenelement dient einerseits als Anbindungspunkt für diverse Fahrzeugkomponenten, wohingegen bis anhin die Anbindungspunkte in der Regel separat in Form von in die Seitenträger und Querträger eingelassene oder an diese befestigten Verbindungselemente angefertigt wurden. Andererseits trägt das Knotenelement wesentlich zur Aussteifung des Hilfsrahmens im Gesamten und des Verbindungungsbereichs zwischen Quer- und Seitenträger im Lokalen bei. Das genannte Knotenelement erlaubt eine durchgängige Ausführung des Seitenträgers im, durch den Knoten verstärkten Verbindungsbereich mit dem Querträger, was wiederum zur Versteifung des Hilfsrahmens beiträgt.

Die Durchgängigkeit der Seitenträger erlaubt die Ausbildung von Deformationszonen im Bereich der Querträger-Verbindungsstellen und den dahinterliegenden Bereichen. Dadurch verbessert sich das Deformationsverhalten der Seitenträger erheblich, indem in der durch die Seitenträger ausgebildeten Deformationsebene mehr Aufprallenergie kontrolliert absorbiert werden kann.

Die im Knotenelement integrierten Anschlussstellen als hülsenartige Anformungen gewährleisten überdies eine optimale Krafteinleitung von den auf diesen abgestützen Fahrzeugkomponenten, wie Fahrzeuglängsträger oder Motormodul, in den Hilfsrahmen, indem die Anschlussstellen zusätzliche Kraftunterstützung durch das die hülsenartige Anformung geschlossen umgebende Trägerprofil, wie Seitenträger oder gegebenenfalls Querträger, sowie durch das Knotenelement selbst erfährt.

Selbstverständlich kann der besagte Hilfsrahmen neben den in den Knotenelementen integrierten Anschlussstellen weitere Anschlussstellen in den Seitenträgern und/oder dem oder den Querträgern enthalten. Diese können beispielsweise in Form der bereits bekannten, in die Trägerprofile eingelassenen Anschlusshülsen ausgestaltet sein.

Im folgenden wird die Erfindung beispielhaft und mit Bezug auf die beiliegenden Zeichnungen näher erläutert. Es zeigen:
- Fig. 1:: eine Unteransicht eines schematisch dargestellten Hilfsrahmens gemäss Erfindung;
- Fig. 2:: eine perspektivische Draufsicht des Verbindungsabschnittes zwischen Seitenträger und Querträger gemäss Erfindung;
- Fig. 3:: eine perspektivische Unteransicht eine Knotenelementes;
- Fig. 4:: einen Querschnitt durch die Schnittlinie A - A gemäss Fig. 2.

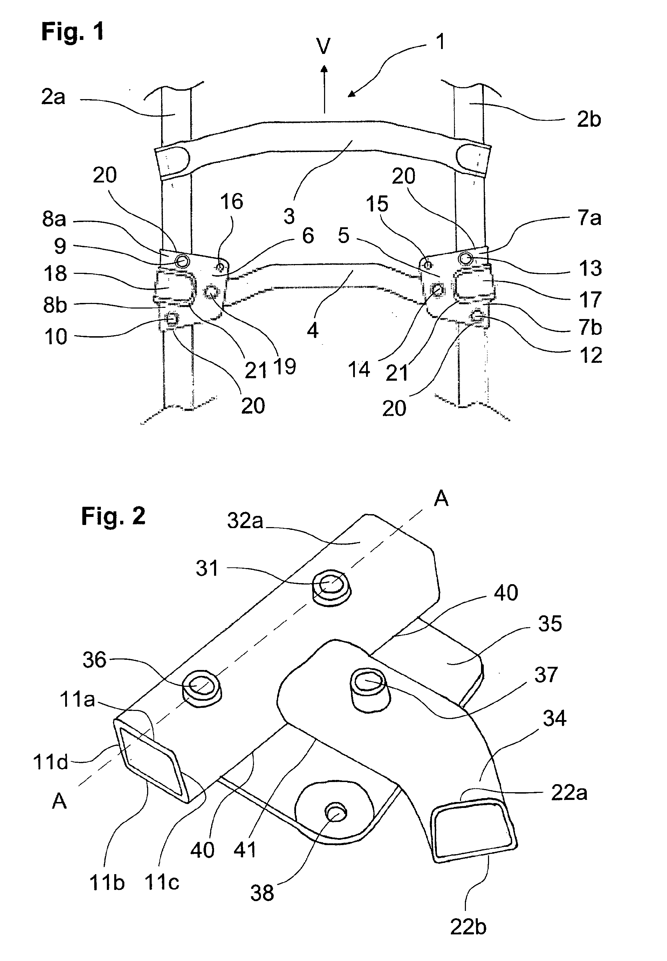

Der Hilfsrahmen 1 gemäss Fig. 1 enthält zwei in Fahrzeuglängsrichtung ausgerichtete, zueinander beabstandete und im wesentlichen parallel verlaufende Seitenträger 2a, 2b, sowie einen in Vorwärtsfahrtrichtung V vorderen Querträger 3 und einen hinteren Querträger 4 und ist Teil eines Fahrzeugvorderbaus. Die Querträger 3, 4 sind mit den Seitenträgern 2a, 2b über Knotenstellen miteinander verbunden. Die Knotenstellen am hinteren Querträger 4 werden durch Knotenelemente 5, 6 ausgebildet, welche über Auflageflächen an unteren Trägerflächen bzw. Profilwände 11 b, 22b der Seitenträger 2a, 2b und des Querträgers 4 anliegen. Die Knotenelemente 5, 6 sind gabelförmig ausgebildet mit jeweils einem ersten Gabelarm bzw. -schenkel 7a, 8a und einem zweiten Gabelarm bzw. -schenkel 7b, 8b.

Der erste Gabelarm 7a, 8a enthält eine Motormodul-Anschlussstelle in der Ausführung einer hülsenartige Anformung 9, 13 für die Anbindung, Abstützung und/oder Lagerung eines Motormoduls (nicht gezeigt), wobei die hülsenartige Anformung von unten in einer Ausnehmung durch den Seitenträger 2a, 2b geführt ist.

Der zweite Gabelarm 7b, 8b enthält eine Karosserie-Anschlussstelle in der Ausführung einer hülsenartige Anformung 10, 12 für die Anbindung des Hilfsrahmens 1 an eine Karosseriestruktur, wie Fahrzeuglängsträger (nicht gezeigt), wobei die hülsenartige Anformung von unten in einer Ausnehmung durch den Seitenträger geführt ist.

Die beiden Knotenelemente 5, 6 enthalten ferner eine weitere Anschlusstelle 15, 16 für Strebenelemente in Form einer durchgängigen Ausnehmung.

Die der unteren Trägerfläche 22b des Querträgers 4 zugewandte Auflagefläche des Knotenelementes 5, 6 enthält eine weitere Motormodul-Anschlussstelle in der Ausführung einer hülsenartige Anformung 14, 19 für die Anbindung, Abstützung und/oder Lagerung eines Motormoduls (nicht gezeigt), wobei die hülsenartige Anformung von unten in einer Ausnehmung durch den Querträger 4 geführt ist.

Der Querträger 4 ist mit seinen Endabschnitten jeweils zwischen den Gabelarmen 7a, 7b; 8a, 8b durchgeführt und liegt im Bereich der unteren Trägerfläche 11 b den Seitenträgern 2a, 2b an. Die Endabschnitte bilden hierbei bodenwärtig offene U-förmige Rinnenprofilquerschnitte aus, welche als Aufnahmebereiche 17, 18 für Lenkerelemente dienen.

Das Knotenelement 5, 6 ist ferner an seinen Seitenträger-Kontakträndern 20 sowie seinen Querträger-Kontakträndern 21 mit dem Seitenträger bzw. dem Querträger wenigstens abschnittsweise unter Ausbildung einer Schweissraupe verschweisst. Ferner sind die aus den oberen Trägerflächen 11a, 22a der Seitenträger 2a, 2b bzw. des Querträgers 4 austretende hülsenförmigen Anformungen 9, 10, 12, 13, 14, 19 an den Kontakträndern mit dem entsprechenden Trägerprofil unter Ausbildung einer die Anformung vollständig oder teilweise umlaufenden Schweissnaht verschweisst.

Der Seitenträger 32a und der Querträger 34 gemäss Fig. 2 sind über ein Knotenelement 35 miteinander verbunden. Der Seitenträger 32a enthält eine obere (11a), dem Motorraum zugewandte, eine untere (11b) dem Boden zugewandte, eine innere (11c), dem Fahrzeuginneren zugewandte, sowie eine äussere (11d), der Fahrzeugaussenseite zugewandte Trägerfläche. Der Querträger 34 enthält eine obere (22a), dem Motoraum zugewandte, und eine untere (22b), dem Boden zugewandte Trägerfläche. Das Knotenelement enthält eine Karosserie-Anschlussstelle in der Ausführung einer hülsenartige Anformung 31 für die Anbindung des Hilfsrahmens an eine Karosseriestruktur, wie Fahrzeuglängsträger (nicht gezeigt), wobei die hülsenartige Anformung 31 von unten in einer Ausnehmung durch Seitenträger 32a geführt ist. Das Knotenelement 35 enthält ferner zwei Motormodul-Anschlussstellen in der Ausführung hülsenartiger Anformungen 36, 37 für die Anbindung, Abstützung und/oder Lagerung eines Motormoduls (nicht gezeigt), wobei eine erste hülsenartige Anformung 36 von unten in einer Ausnehmung durch den Seitenträger 32a und eine zweite hülsenartige Anformung 37 von unten in einer Ausnehmung durch den Quertäger 34 geführt ist.

Das Knotenelement 35 kann abschnittsweise oder durchgehend entlang seiner Seitenträger-Kontaktränder 40 mit dem Seitenträger 32b und entlang seiner Querträger-Kontaktränder 41 mit dem Querträger 34 verschweisst sein. Das Knotenelement 35 enthält ferner eine Anbindungsstelle 38 in Form einer durchgehenden Ausnehmung für ein Fahrzeugaggregat.

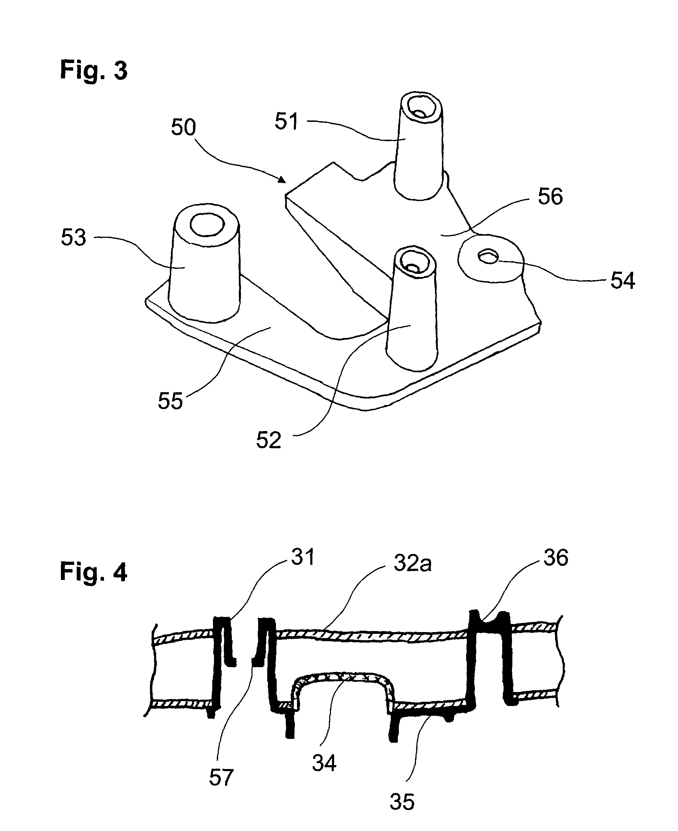

Fig. 3 zeigt ein schematisch dargestelltes Knotenelement 50 mit einem ersten Gabelschenkel 55 und zweiten Gabelschenkel 56. Der erste Gabelschenkel 55 enthält eine Anbindungsstelle für eine Karosseriestruktur in Form einer hülsenförmigen Anformung 53. Der zweite Gabelschenkel 56 enthält eine Anschlussstelle zur Abstützung bzw. Lagerung eines Motormoduls in Form einer hülsenförmigen Anformung 51. Eine weitere Motormodul-Anschlussstelle in Form einer hülsenartigen Anformung 52 ist im Verbindungsteil zwischen den beiden Gabelschenkein 55, 56 angeordnet. Im weiteren enthält das Knotenelement 50 eine weitere Anschlussstelle 54 in Form einer durchgängigen Ausnehmung zur Anbindung von z.B. Verbindungsstreben oder weiteren Aggregaten.

Die Querschnittsansicht in Fig. 4 durch die Schnittlinie A - A gemäss Fig. 2 zeigt das Knotenelement 35 mit der ersten hülsenförmigen Anformung 31 zur Anbindung des Hilfsrahmens an die Karosseriestruktur und der zweiten hülsenförmigen Anformung 36 zur Abstützung eines Motormoduls auf den Hilfsrahmen. Die beiden hülsenförmigen Anformungen 31, 36 sind auf Gabelschenkeln des Knotenelementes 35 angeordnet. Die beiden hülsenförmigen Anformungen 31, 36 sind in Ausnehmungen im Seitenträger 32a eingelassen. Sie durchqueren diesen vollständig und ragen mit ihren Endabschnitten um ein bestimmtes Mass über seine obere Trägerfläche hinaus. Die hülsenförmige Anformung 36 der Motormodul-Anschlussstelle weist in ihrem oberen Endabschnitt eine pfannenartige Vertiefung auf, welche durch eine Kammerwand in der Anformung ausgebildet wird.

Die hülsenförmige Anformung 31 der Karosserie-Anschlussstelle weist in ihrem oberen Endabschnitt eine ringförmige, vollumfängliche Verengung 57 der Kammer auf. Die Verengung 57 dient bsp. zur Aufnahme einer Schraubenmutter zwecks Fixierung eines Schraubbolzens (nicht gezeigt).

Zwischen den beiden Gabelschenkeln ist der in zu einem U-förmigen Querschnitt ausgebildete Endabschnitt des Querprofils 34 durchgeführt. Der besagte Endabschnitt ist in eine in der unteren Trägerfläche des Seitenträgers 32a vorgesehene Ausnehmung eingelassen.

## Patentansprüche

1. Hilfsrahmen (1) für Kraftfahrzeuge, insbesondere für Vorderachsen von Personenkraftwagen, enthaltend zwei in Abstand zueinander angeordnete, in Fahrzeuglängsrichtung ausgerichtete Seitenträger (2a, 2b) sowie wenigstens einen die beiden Seitenträger miteinander verbindenden Querträger (4), wobei der Querträger jeweils über ein versteifendes Knotenelement (5, 6) mit den Seitenträgern verbunden ist,
**dadurch gekennzeichnet, dass**
das Knotenelement (5, 6) ein Gussteil mit wenigstens einer integrierten, der unteren Trägerfläche des Seitenträgers (2a, 2b) anliegenden Seitenträger-Auflagefläche und wenigstens einer integrierten, der unteren Trägerfläche des Querträgers (4) anliegenden Querträger-Auflagefläche sowie mit wenigstens einer integrierten Anschlussstelle für die Anbindung oder Abstützung einer Fahrzeugkomponente, wobei die Anschlusstelle eine von der Seitenträger-Auflagefläche vorstehende und von unten in einer Ausnehmung durch den Seitenträger (2a, 2b) oder eine von der Querträger-Auflagefläche vorstehende und von unten in einer Ausnehmung durch den Querträger (4) geführte hülsenartige Anformung (9, 10, 12, 13) am Knotenelement (5, 6) ist.

2. Hilfsrahmen nach Anspruch 1, wobei die Anschlussstelle eine Karosserie-Anschlussstelle, insbesondere eine Fahrzeuglängsträger-Anschlussstelle, zur Anbindung des Hilfsrahmens (1) an die Karosseriestruktur, insbesondere an den Fahrzeuglängsträger, oder eine Motormodul-Anschlussstelle zur Abstützung eines Motormoduls auf den Seitenträger (2a, 2b) oder den Querträger (4) ist.

3. Hilfsrahmen nach einem der Ansprüche 1 bis 2, wobei die hülsenartige Anformung (9, 10, 12, 13, 14, 19) den Seitenträger (2a, 2b) oder den Querträger (4) vollständig durchstösst und andernends mit ihrem Endabschnitt aus der oberen Trägerfläche des Seitenträger (2a, 2b) oder des Querträgers (4) austritt.

4. Hilfsrahmen nach einem der Ansprüche 1 bis 3, wobei die hülsenartige Anformung (9, 10, 12, 13, 14, 19) an ihrem freien, aus dem Seitenträger (2a, 2b) oder Querträger (4) austretenden Ende mit dem Seitenträger (2a, 2b) oder Querträger (4) verschweisst ist.

5. Hilfsrahmen nach einem der Ansprüche 1 bis 4, wobei der Seitenträger (2a, 2b) im Bereich der Anbindung des Querträgers (4) durchgängig ausgebildet ist.

6. Hilfsrahmen nach einem der Ansprüche 1 bis 5, wobei die Seitenträger (2a, 2b) und/oder die Querträger (4) Ein- oder Mehrkammerhohlprofile sind.

7. Hilfsrahmen nach einem der Ansprüche 1 bis 6, wobei das Knotenelement (5, 6) ein Metallgussteil, vorzugsweise ein Leichtmetallgussteil, insbesondere ein Gussteil aus Aluminium oder einer Aluminiumlegierung ist.

8. Hilfsrahmen nach einem der Ansprüche 1 bis 7, wobei das Knotenelement (5, 6) als flächiges Formteil mit wenigstens einer von diesem abstehenden hülsenartigen Anformung (9, 10, 12, 13, 14, 19) ausgebildet ist.

9. Hilfsrahmen nach einem der Ansprüche 1 bis 8, wobei das Knotenelement (5, 6) ein einstückig mittels Druckguss, Kokillenguss oder Sandguss hergestelltes Formteil ist.

10. Hilfsrahmen nach einem der Ansprüche 1 bis 9, wobei das Knotenelement (5, 6) eine erste integrierte Fahrzeuglängsträger-Anschlussstelle und eine zweite integrierte Motormodul-Anschlussstelle enthält, und die Anschlusstellen von einer Seitenträger-Auflagefläche vorstehende und von unten in einer Ausnehmung durch den Seitenträger geführte hülsenartige Anformung am Knotenelement (5, 6) sind.

11. Hilfsrahmen nach einem der Ansprüche 1 bis 10, wobei das Knotenelement (5, 6) eine integrierte Anschlussstelle zur Anbindung oder Abstützung einer Fahrzeugkomponente enthält, und die Anschlussstelle eine von einer Querträger-Auflagefläche vorstehende und von unten in einer Ausnehmung durch den Querträger geführte hülsenartige Anformung (14, 19) am Knotenelement (5, 6) ist.

12. Hilfsrahmen nach Anspruch 11, wobei die Anschlussstelle eine Motormodul-Anschlussstelle für die Abstützung eines Motormoduls auf den Querträger (4) oder eine Fahrzeuglängsträger-Anschlussstelle zur Anbindung des Hilfsrahmens an den Fahrzeuglängsträger ist.

13. Hilfsrahmen nach einem der Ansprüche 11 bis 12, wobei die hülsenartige Anformung (14, 19) den Querträger (4) vollständig durchstösst und andernends mit ihrem Endabschnitt aus der oberen Trägerfläche des Querträgers (4) austritt.

14. Hilfsrahmen nach einem der Ansprüche 11 bis 13, wobei die hülsenartige Anformung (14, 19) an ihrem freien, aus dem Querträger austretenden Ende mit dem Querträger (4) verschweisst ist.

15. Hilfsrahmen nach einem der Ansprüche 1 bis 14, wobei das Knotenelement (5, 6) eine oder mehrere integrierte Anschlussstellen (15, 16) zur Anbindung von Aggregaten und/oder Streben enthält.

16. Hilfsrahmen nach einem der Ansprüche 1 bis 15, wobei das Knotenelement (5, 6) gabelförmig mit einem ersten und zweiten jeweils eine Seitenträger-Auflagefläche ausbildenden Gabelschenkel (7a, 7b; 8a, 8b) ist.

17. Hilfsrahmen nach Anspruch 16, wobei in einem ersten Gabelschenkel (7a, 8a) eine Motormodul-Anschlussstelle und/oder in einem zweiten Gabelschenkel (7b, 8b) eine Fahrzeuglängsträger-Anschlussstelle ausgebildet ist.

18. Hilfsrahmen nach einem der Ansprüche 16 bis 17, wobei der Endabschnitt des Querträgers (4) unter Anlage an der unteren Trägerfläche des Seitenträgers (2a, 2b) zwischen dem ersten und zweiten Gabelschenkel (7a, 7b; 8a, 8b) hindurchgeführt ist.

19. Hilfsrahmen nach Anspruch 18, wobei der zwischen dem ersten und zweiten Gabelschenkel (7a, 7b; 8a, 8b) angeordnete Endabschnitt des Querträgers (4) als Anschlussstelle für Lenkerelemente in Form eines U-förmigen Querschnitt ausbildet ist.

20. Hilfsrahmen nach Anspruch 18, wobei im Knotenelement 5 die Anschlussstelle für die Fahrwerkslenker ausgeführt sind.
